# EUROPEAN PATENT SPECIFICATION

(11) **EP 2 060 028 B1**
(45) Date of publication and mention of the grant of the patent: **27.07.2011**
(21) Application number: 07808459.7
(22) Date of filing: 27.09.2007
(51) Int. Cl.: H04W 84/20

(54) **Handover method and apparatus**
Übergabeverfahren und -Vorrichtung
Procédé et apparail de transfert

(30) Priority: 02.10.2006 US 848403 P; 21.12.2006 KR 20060131853
(43) Date of publication of application: 20.05.2009
(73) Proprietor: Samsung Electronics Co., Ltd., Gyeonggi-do 442-742 (KR)
(72) Inventor: LEE, Jae-Min, Suwon-si, Gyeonggi-do 443-470 (KR); KWON, Chang-Yeul, Gyeonggi-do 446-567 (KR); FAN, Guoping, Suwon-si, Gyeonggi-do, 443-470 (KR)
(74) Representative: Fearnside, Andrew Simon
(86) International application number: PCT/KR2007/004713
(87) International publication number: WO 2008/041806

(56) References cited:
- EP-A- 1 176 762
- EP-A- 1 548 985
- JP-A- 10 308 697
- US-A1- 2004 255 001
- US-A1- 2005 059 420
- US-A1- 2005 122 944

## Description

### Technical Field

Apparatuses and methods consistent with the present invention relate to wireless communications, and more particularly to coordinator handover in high frequency bandwidth wireless communications.

### Background Art

Networks are becoming wireless, demands for high capacity multimedia data transmission are increasing, and research is required to develop effective transmission methods for wireless network environments. Moreover, the desire to wirelessly transmit high quality video, such as a DVD (Digital Video Disk) images, HDTV (High Definition Television) images, and others, between various home devices is increasing.

Currently, one IEEE 802.15.3c task group is promoting the adoption of a technical standard enabling the transmission of large amount of data in a wireless home network. In such a standard, called Wave (Millimeter Wave), a radio wave having a wavelength on the order of millimeters (i.e., a radio wave with a frequency in the range of 30 to 300) is used for high capacity data transmission. In the past, this frequency band was an unlicensed band, and its use was limited to communication providers, radio astronomy, vehicle collision avoidance, and others.

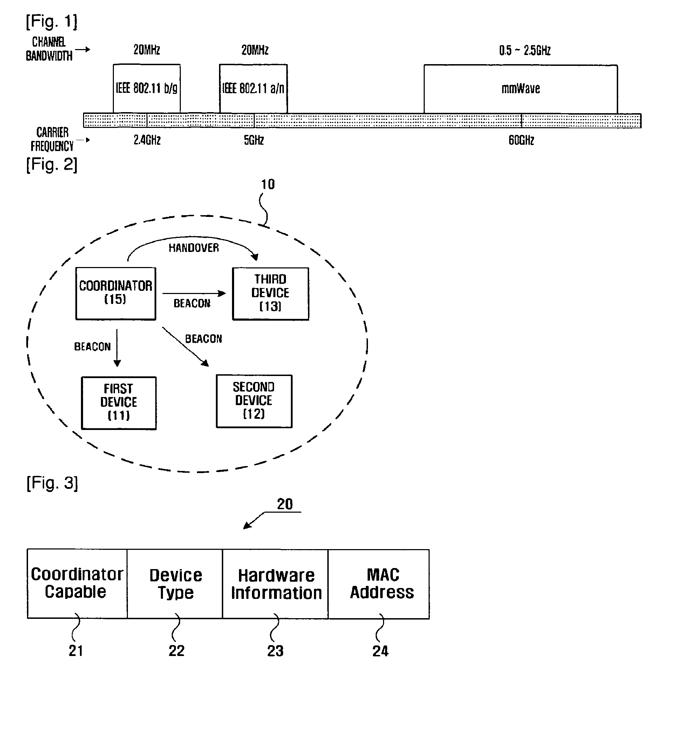

FIG. 1 is a view showing a comparison of the frequency bandwidth of IEEE 802.11 standard and Wave. IEEE 802.11b and IEEE 802.11g employs a carrier frequency of 2.4 and a channel bandwidth of about 20. Also, IEEE 802.11a and IEEE 802.11n employs a carrier frequency of 5 and a channel bandwidth of about 20 . In contrast, Wave uses a carrier frequency of 60, and has a channel bandwidth in the range of 0.5 to 2.5. Thus, the carrier frequency and the channel bandwidth of the Wave are much larger than those of existing IEEE 802 standards. If a high frequency signal with a millimeter wavelength (Wave) is used in this way, a very high data rate on the order of several gigabits per second (Gbps) can be obtained, and a single chip including an antenna can be realized because the size of an antenna can be reduced to below 1.5 . Also, the interference between devices can be reduced because the attenuation ratio is very high.

Particularly, research has recently been pursued to transmit uncompressed audio or video data (hereinafter referred to as "uncompressed AV data") between wireless appliances by using the high bandwidth of Wave. Compressed AV data is lossy-compressed in such a manner that portions that the human visual and auditory system are less sensitive to are removed through processes of motion compensation, discrete cosine transform (DCT), quantization, variable length coding, and others. Thus, in the case of the compressed AV data, deterioration of image quality may be caused by the compensation loss, and there is a problem in that AV data compression and restoration operations must follow the same standard. On the contrary, uncompressed AV data contains digital values representing pixel components (e.g., R, G and B components) in their entirety.

A network coordinator (hereinafter, referred to as "coordinator") is required in a network that is configured by wireless devices transmitting and receiving data via the high frequency bandwidth. Generally, the coordinator performs network-managing functions such as initialization of the network, management of nodes (wireless devices), and allocation of bandwidth. However, if the coordinator is shut down, or cannot perform the coordinator role, the coordinator role is handed over to another device, and this is called a "handover".

FIG. 2 depicts a general handover. A wireless network 10 includes a plurality of devices 11, 12, 13, and 15 that can communicate with each other. One of the devices performs the coordinator role. That is, the coordinator 15 can perform a device role and a coordinator role at the same time. The coordinator 15 performs the network managing function by periodically transmitting a management frame such as a beacon to the other devices 11, 12, and 13, and receiving a network join request and a bandwidth allocation request from the devices.

When the coordinator 15 cannot perform the coordinator role (e.g., power off or network separation), the coordinator role is handed over to a device 13 that can perform the coordinator role.

When the coordinator hands over the coordinator role to another device in the related art wireless network system, the coordinator searches for an optimum wireless device by comprehensively considering properties of the wireless devices and the wireless network, and hands over the coordinator role to the optimum device. The properties include data security, the number of high-capacity wireless devices, the maximum number of allocatable time slots, transmission power level, and the highest transmission rate. European patent application 03799134.6 (publication number EP 1548985) and european patent application 01304435.9 (publication number EP 1176762) discloses a communications network having a master device and slave devices, and a method of identifying a back-up master device to replace the master in the network should the master be removed from the network.

### Disclosure of the Invention

### Technical Problem

Continuous and stable transmission is desired of large amounts of data in a wireless network system for transmitting and receiving uncompressed AV data via a high frequency bandwidth. Accordingly, a handover algorithm appropriate for the environment is required.

### Technical Solution

Exemplary embodiments of the present invention overcome the above disadvantages and other disadvantages not described above. Also, the present invention is not required to overcome the disadvantages described above, and an exemplary embodiment of the present invention may not overcome any of the problems described above.

An aspect of the present invention provides a handover method of a coordinator in a high frequency bandwidth wireless communication, which transmits large amounts of uncompressed AV data via several Gbps bandwidth.

This and other aspects of the present invention will become clear to those skilled in the art upon review of the following description, attached drawings and appended claims.

According to an aspect of the present invention, there is provided an apparatus having the coordinator capability in a network for transmitting and receiving data, the apparatus including a device priority list that records the priorities of devices that can act as a coordinator, a handover controller that requests a handover to a selected device by referring to the device priority list, and a transceiver that transmits network information to the device according to the handover, characterised in that the device priority is set according to a device type, and a device is set to a higher priority designation than otherwise if the device type is a source device.

According to another aspect of the present invention, there is provided a coordinator-handover method in a network for transmitting and receiving data, the method including selecting a device by referring to a device priority list having a priority of devices that can act as a coordinator, requesting a handover to the selected device, and transmitting network information to the device according to the handover, characterised in that the device priority is set according to a device type, and a device is set to a higher priority designation than otherwise if the device type is a source device. A device having superior hardware performance is preferably set to the high priority designation if devices of the plurality of devices are the same type.

According to still another aspect of the present invention, there is provided a coordinator-handover method in a network for transmitting and receiving data, the method including determining a backup coordinator based on a device priority, detecting that a beacon is not received when a beacon period more than a predetermined time period elapses, and transmitting a beacon to devices on the network as a new coordinator, characterised by setting the device priority according to a device type, and setting a device to a higher priority designation than otherwise if the device type is a source device. A device having superior hardware performance is preferably set to the high priority designation if devices of the plurality of devices are the same type.

### BRIEF DESCRIPTION OF THE DRAWINGS

The above and other aspects of the present invention will become apparent by describing in detail exemplary embodiments thereof with reference to the attached drawings in which:

FIG. 1 is a view showing a comparison of the frequency bandwidth of IEEE 802.11 standard and mmWave;

FIG. 2 depicts a general handover;

FIG. 3 depicts the configuration of an association request frame according to an exemplary embodiment of the present invention;

FIG. 4 is a flowchart showing an expected handover process according to an exemplary embodiment of the present invention;

FIG. 5 is a flowchart showing an unexpected handover process according to an exemplary embodiment of the present invention;

FIG. 6 is a block diagram showing the configuration of a wireless device according to an exemplary embodiment of the present invention.

### Mode for the Invention

Exemplary embodiments of the present invention will be described in detail with reference to the accompanying drawings.

Aspects of the present invention and methods of accomplishing the same may be understood more readily by reference to the following detailed description of the exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art. Like reference numerals refer to like elements throughout the specification.

An aspect of the present invention relates to a handover method of a coordinator of a network in high frequency bandwidth wireless communication, which defines a cause of triggering a coordinator handover, and discloses a detailed handover process.

Device Priority List

In IEEE 802.15.3 wireless personal area network (PAN) standard provided, several functions and an optimum coordinator are determined by comprehensively determining several functions of devices on a network. However, the related art determining standard is not appropriate and a collective standard corresponding to properties of devices is required in an environment where large amounts of data is transmitted via a high-frequency bandwidth. Accordingly, the coordinator handover is prioritized by device priority. It is assumed that a device is turned on, and is able to act as a coordinator, i.e., a coordinator capability, in order for the device to be a coordinator.

When a network is first composed, the coordinator is determined according to the device priority. Even when the existing coordinator is shut down, or separated from the network, the next coordinator is determined according to the device priority. If a device whose priority is higher than that of the existing coordinator joins the network, the device can be the new coordinator.

Specifically, a device that can operate as a source device has a higher priority for transmitting and receiving large amounts of data. The coordinator allocates a period when the devices can transmit data, i.e., a time slot, upon the devices' request. According to the network state, the devices may not receive the time slot, or may receive an insufficient time slot. If a source device is a coordinator, it is possible to continuously and stably transmit large amounts of AV data because the device can allocate the time slot to itself.

If there are several devices that can operate as a source device, a device having a high hardware performance has a high priority. Table 1 shows the device priority list.

Table 1

**[Table 1] Table 1: Device Priority List**

| **DEVICE PRIORITY** | **DEVICE TYPE** |
|---|---|
| 1 | DIGITAL TV |
| 2 | SET-TOP BOX |
| 3 | PC |
| 4 | DVD RECORDER |
| 5 | DVD PLAYER |
| 6 | A/V RECEIVER |
| 7 | GAME CONSOLE |

If a digital TV, a set-top box, and a DVD recorder exist in a current network and all devices, except for the set-top box, have a coordinator capability, the digital TV is operates as a coordinator. The DVD recorder is predetermined as a backup coordinator according to the device priority in case the digital TV is separated from the network. Then, if the digital TV is shut down, the DVD recorder operates as a coordinator in the network.

If a PC having the coordinator capability joins the network, the DVD recorder checks the device priority again, and hands over the coordinator role to the PC.

The coordinator should know information on the device in order to choose the backup coordinator. When joining the network, all devices provide their information, and transmit an association request frame requesting a join to the coordinator.

FIG. 3 depicts the configuration of an association request frame according to an exemplary embodiment of the present invention.

A coordinator-capable field 21 shows whether a device that joins the network is able to be a coordinator. A device type field 22 shows the types of devices that have joined the network. If a present identification number is given according to types of devices in advance, only the identification number is recorded in this field 22.

A hardware information field 23 details the hardware performances of devices that join the network. The hardware performance includes a processor performance, a memory capacity, a transmission power level, and a transmission rate.

A MAC address field 24 shows the MAC address of a device that joins the network. The MAC address is a proper address of the corresponding device. The coordinator can allocate an identifier used in the network, i.e., a device ID, based on the MAC address.

An association-request frame 20 can further include a field recording the index number of the frame and a field recording the length of the frame (not shown).

Handover Trigger

There may be several causes of triggering a coordinator handover. For example, there are cases where the current coordinator is suddenly powered off, the current coordinator is shut down, the current coordinator is not properly connected to the other devices on the network, and a device having a higher priority joins the network.

Handover Process

In the exemplary embodiment of the present invention, there is an expected handover and an unexpected handover.

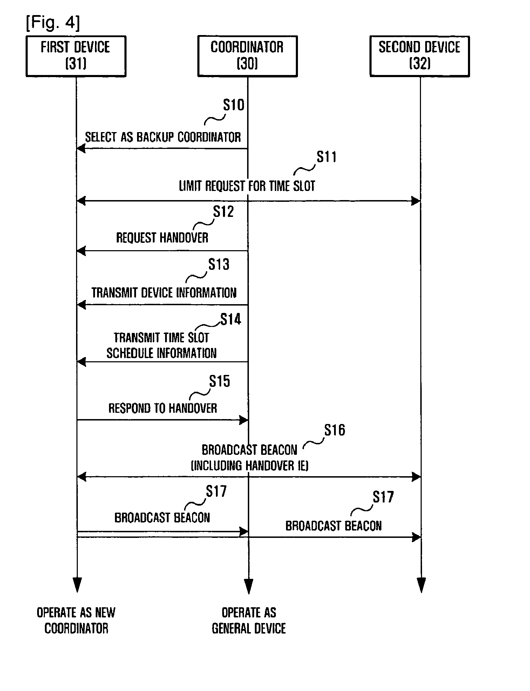

FIG. 4 is a flowchart showing an expected handover process according to an exemplary embodiment of the present invention.

The expected handover is generated when a coordinator gives up the coordinator role, or a device that has a higher priority and a coordinator capability joins the network.

First, a coordinator 30 chooses a first device 31 of devices 31 and 32 in the network as a backup coordinator by referring to the device priority list S 10.

If a handover is expected, the coordinator 30 limits a request for a time slot from the other devices 31 and 32 S11. Specifically, when receiving a request for a time slot from the devices 31 and 32, the coordinator 30 sends a rejection as a response to the devices 31 and 32.

The coordinator 30 selects a backup coordinator by referring to the device priority. If the first device 31 is selected as a backup coordinator, the coordinator 30 transmits a frame requesting a handover S 12. The coordinator 30 transmits network information to the first device 31 S 13 and information on a reserved time slots (time slot schedule information) to the first device 31 S 14.

The first device 31 that received a frame requesting a handover can transmit a frame that responds to the coordinator 30 before a predetermined time period expires S 15. At this time, the response frame includes an acceptance or a rejection of the handover. If the coordinator 30 does not receive a frame response to the handover before the time period expires, it is assumed that the handover request is rejected.

If the first device 31 accepts the handover request, the coordinator 30 broadcasts a beacon including a handover information element (IE) S16 to the devices 31 and 32 in the network. Through the beacon, the devices 31 and 32 can know that the first device 31 will be a new coordinator S 17.

The first device 31 is operated as the new coordinator, and the coordinator 30 is operated as a general device like the second device 32.

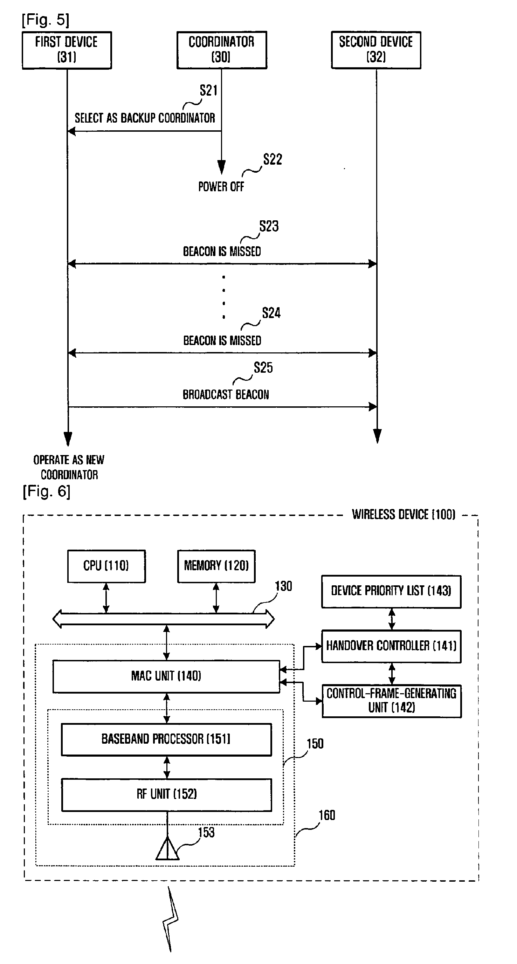

FIG. 5 is a flowchart showing an unexpected handover process according to an exemplary embodiment of the present invention.

The coordinator 30 may perform an expected handover process. However, if the coordinator 30 suddenly cannot perform the coordinator role, an unexpected handover process may be performed.

In this case, the coordinator 30 chooses the first device 31 as a backup coordinator of the devices 31 and 32 in the network by referring to the device priority S21. Then, the coordinator 30 is powered off S22.

The devices 31 and 32 awaiting a beacon, which is periodically broadcasted, continuously miss the beacon S23 and S 14. If the first device 31 chosen as the backup coordinator misses the beacon more than predetermined number of times S24, it is considered that the coordinator 30 cannot perform the coordinator role anymore, and therefore the first device 31 performs the coordinator role.

Then, the first device 31 starts a new coordinator role by periodically broadcasting a beacon to another device 32 in the network S25. At this time, the first device 31, the new coordinator, can know the state of another device 32 by observing traffic during a dynamic channel time block (CTB).

FIG. 6 is a block diagram showing the configuration of a wireless device 100 according to an exemplary embodiment of the present invention. The wireless device 100 can be a coordinator, and therefore may be a coordinator or a general wireless device that does not perform the coordinator role depending upon the situation.

The wireless device 100 includes a CPU 110, a memory 120, a MAC unit 140, a PHY unit 150, a handover controller 141, a control-frame-generating unit 142, and an antenna 153. The MAC unit 140, the PHY unit 150, and the antenna 153 may be defined as a transceiver 160.

The CPU 110 controls other elements connected to a bus 130, and processes a MAC layer on an upper layer. Accordingly, the CPU 110 processes received data (MAC Service Data Unit (MSDU)) provided by the MAC unit 140, or generates the to-be-transmitted uncompressed AV data (transmission MSDU), and provides the data to the MAC unit 140.

The memory 120 stores the processed received data or temporally stores the generated transmission data. The memory can be embodied as a nonvolatile memory device such as read-only memory (ROM), programmable ROM (PROM), erasable PROM (EPROM), electric EPROM (EEPROM), or a flash memory, a volatile memory device such as a random access memory (RAM), or a storage medium such as hard disk drive (HDD) or optical disk, or another format known in the art.

The MAC unit 140 generates a MAC protocol data unit (MPDU) by adding a MAC header to the uncompressed AV data provided from the CPU 110 or the control frame generated by the control-frame-generating unit 142. The generated MPDU is transmitted by the PHY unit 150.

The PHY unit 150 generates a PPDU by adding a signal field and preamble to the MPDU provided by the MAC unit 140, and converts the generated PPDU, i.e., a data frame into a wireless signal, and transmits the signal via the antenna 153. The PHY unit 150 can be divided into a baseband processor 151 that processes a baseband signal, and the processed baseband signal and a radio frequency (RF) unit 152 that generates a real wireless signal from the processed baseband signal, and transmits the signal via the antenna 153.

Specifically, the baseband processor 151 performs frame formatting and channel coding. The RF unit 152 performs analog wave amplification, and converts and alters the analog/digital signal.

The control-frame-generating unit 142 generates a control frame for controlling communication in the network, and provides the control frame to the MAC unit 140. The control frame includes a beacon frame that is periodically broadcasted in the network, a response frame for the time slot request, a handover request frame, and a frame that transmits the network information to the backup coordinator.

The device priority list 143 has the device priority according to types of devices. The device priority list 143 can be stored in the memory 120.

The handover controller 141 selects a wireless device to be a backup coordinator of the other wireless devices in the network by refen-ing to the device priority list, and requests a handover to the selected wireless device when a specific condition is satisfied. When the handover is requested, the handover controller 141 controls the control-frame-generating unit 142 to generate a handover request frame.

The handover controller 141 transmits the network information to the selected wireless device via the transceiver 160 after the handover is requested. The network information includes device information on the other wireless devices in the network and schedule information on the requested time slot.

Then, the handover controller 141 receives a response for the handover request from the selected wireless device via the transceiver 160. If the response is an acceptance, the handover is performed normally, and therefore a beacon frame including the handover IE is broadcasted on the network. If the response is a rejection, however, the handover can be performed to a next-priority wireless device by referring to the device priority list.

The components of FIG. 6 are software components such as task components, class components, subroutines, processes, objects, execution threads, and programs, which perform certain tasks, or hardware components, such as a Field Programmable Gate Array (FPGA) or an Application Specific Integrated Circuit (ASIC), or a combination of software and hardware. The components may be included in a machine-readable storage medium, and some of the components may be further separated into a plurality of computers.

As described above, the method and apparatus for a coordinator handover in high frequency bandwidth wireless communication according to the exemplary embodiments of the present invention produce one or more of the effects described below.

### Industrial Applicability

In the wireless network using a high frequency bandwidth, the handover of the coordinator can be efficiently performed based on a predetermined device priority.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An apparatus having a coordinator capability in a network where data is transmitted and received, the apparatus comprising
a device priority list which records a device priority of a plurality of devices to be a coordinator;
a handover controller which requests a handover to a selected device by referring to the device priority list; and
a transceiver which transmits network information to the selected device according to the handover, **characterised in that**:
the device priority is set according to a device type, and a device is set to a higher priority designation than otherwise if the device type is a source device.

2. The apparatus of claim 1, wherein a digital TV has the highest priority designation.

3. The apparatus of claim 1, wherein the handover controller selects a wireless device to be a backup coordinator of other wireless devices that belong to the network by referring to the device priority list, and requests the handover to the selected device if a specific condition is satisfied.

4. The apparatus of claim 1, wherein the network is a high frequency bandwidth network, and the high frequency bandwidth is tens of gigabits, and the data is uncompressed AV data.

5. The apparatus of claim 2, wherein a device having superior hardware performance is set to the high priority designation if devices of the plurality of devices are the same type.

6. The apparatus of claim 3, wherein the specific condition is at least one of the current coordinator is suddenly powered off, the current coordinator is expected to be shut down, the current coordinator is improperly connected to the other devices on the network, and a device having a higher priority joins the network.

7. The apparatus of claim 1, wherein the network information comprises at least one of device information on the other devices and time slot schedule information.

8. The apparatus of claim 3, wherein the handover controller receives a handover response from the selected device.

9. The apparatus of claim 8, wherein the handover controller transmits a beacon comprising a handover information element (IE) via the transceiver.

10. A coordinator-handover method in a network, the method comprising:
selecting a device of a plurality of devices to be a coordinator by referring to a device priority list having a priority of devices;
requesting a handover to the selected device; and
transmitting network information to the device according to the handover, **characterised in that**:
the device priority is set according to a device type, and a device is set to a higher priority designation than otherwise if the device type is a source device.

11. The method of claim 10, wherein a digital TV has the highest priority designation.

12. The method of claim 10, further comprising receiving a handover response from the selected device.

13. The method of claim 10, further comprising:
broadcasting a beacon comprising a handover information element (IE).

14. A coordinator-handover method in a network, the method comprising:
determining a backup coordinator based on a device priority;
detecting that a beacon has not been received and a beacon period more than predetermined time has elapsed; and
transmitting the beacon to a plurality of devices on the network as a new coordinator, **characterised by**:
setting the device priority according to a device type, and setting a device to a higher priority designation than otherwise if the device type is a source device.

15. The method of claim 14, wherein a digital TV has the highest priority designation.

## Patentansprüche

1. Vorrichtung mit ei ne r Koordinatorfähigkeit in einem Netz, in dem Daten gesendet und empfangen werden, wobei die Vorrichtung Folgendes umfasst:
eine Einrichtungsprioritätsliste, die eine Einrichtungspriorität mehrerer Einrichtungen verzeichnet, ein Koordinator zu sein;
eine Handover-Steuerung, die ein Handover zu einer gewählten Einrichtung durch Bezugnahme auf die Einrichtungsprioritätsliste anfordert; und
einen Sender/Empfänger, der Netzinformationen zu der gewählten Einrichtung gemäß dem Handover sendet, **dadurch gekennzeichnet, dass**
d i e Einrichtungspriorität gemäß einem Einrichtungstyp gesetzt wird und eine Einrichtung auf eine höhere Prioritätsdesignierung als andernfalls gesetzt wird, wenn der Einrichtungstyp eine Quelleneinrichtung ist.

2. Vorrichtung nach Anspruch 1, wobei ein Digital-TV die höchste Prioritätsdesignierung aufweist.

3. Vorrichtung nach Anspruch 1, wobei die Handover-Steuerung durch Bezugnahme auf die Einrichtungsprioritätsliste eine drahtlose Einrichtung auswählt, ein Backup-Koordinator anderer drahtloser Einrichtungen zu sein, die zu dem Netz gehören, und das Handover zu de r gewählten Einrichtung anfordert, wenn eine spezifische Bedingung erfüllt ist.

4. Vorrichtung nach Anspruch 1, wobei das Netz ein Hochfrequenzbandbreitennetz ist un d die Hochfrequenzbandbreite mehrere zehn Gigabit beträgt und die Daten unkomprimierte AV-Daten sind.

5. Vorrichtung nach Anspruch 2, wobei eine Einrichtung mit überlegener Hardware-Leistungsfähigkeit auf die hohe Prioritätsdesignierung gesetzt wird, wenn Einrichtungen der mehreren Einrichtungen vom selben Typ sind.

6. Vorrichtung nach Anspruch 3, wobei die spezifische Bedingung mindestens eine der folgenden ist : der aktuelle Koordinator wird plötzlich heruntergefahren, e s wird erwartet, dass der aktuelle Koordinator heruntergefahren wird, der aktuelle Koordinator ist nicht ordnungsgemäß mit den anderen Einrichtungen in dem Netz verbunden und eine Einrichtung mit einer höheren Priorität schließt sich dem Netz an.

7. Vorrichtung nach Anspruch 1, wo b e i die Netzinformationen Einrichtungsinformationen über die anderen Einrichtungen und/oder Zeitschlitz-Ablaufplanungsinformationen umfassen.

8. Vorrichtung nach Anspruch 3, wobei die Handover-Steuerung eine Handover-Antwort von der gewählten Einrichtung empfängt.

9. Vorrichtung nach Anspruch 8, wobei die Handover-Steuerung über den Sender/Empfänger eine Bake sendet, die ein Handover-Informationselement (IE) umfasst.

10. Koordinator-Handover-Ver fahren in einem Netz, wobei das Verfahren die folgenden Schritte umfasst:
Auswählen einer Einrichtung von mehreren Einrichtungen, ein Koordinator zu sein, durch Bezugnahme auf eine Einrichtungsprioritätsliste, die eine Priorität von Einrichtungen aufweist;
Anfordern eines Handover zu de r gewählten Einrichtung; und
Senden von Netzinformationen zu der Einrichtung gemäß dem Handover, **dadurch gekennzeichnet, dass**
d i e Einrichtungspriorität gemäß einem Einrichtungstyp gesetzt wird und eine Einrichtung auf eine höhere Prioritätsdesignierung als andernfalls gesetzt wird, wenn der Einrichtungstyp eine Quelleneinrichtung ist.

11. Verfahren nach Anspruch 10, wobei ein Digital-TV die höchste Prioritätsdesignierung aufweist.

12. Verfahren nach Anspruch 10, ferner mit dem Schritt des Empfangens einer Handover-Antwort von der gewählten Einrichtung.

13. Verfahren nach Anspruch 10, ferner mit dem folgenden Schritt:
Ausstrahlen ei ne r Bake, die ein Handover-Informationselement (IE) umfasst.

14. Koordinator-Handover-Verfahren in einem Netz, wobei das Verfahren die folgenden Schritte umfasst:
Bestimmen eines Backup-Koordinators auf der Basis einer Einrichtungspriorität;
Detektieren, dass keine Bake empfangen wurde und eine Bakeperiode von mehr als einer vorbestimmten Zeit vergangen ist; und
Senden der Bake zu mehreren Einrichtungen in dem Netz als ein neuer Koordinator, **gekennzeichnet durch**
Setzen de r Einrichtungspriorität gemäß einem Einrichtungstyp und Setzen einer Einrichtung auf eine höhere Prioritätsdesignierung als andernfalls, wenn der Einrichtungstyp eine Quelleneinrichtung ist.

15. Verfahren nach Anspruch 14, wobei ein Digital-TV die höchste Prioritätsdesignierung aufweist.

## Revendications

1. Appareil ayant un e fonctionnalité de coordinateur dans un réseau dans lequel des données sont émises et reçues, l'appareil comprenant :
une liste de priorités des dispositifs dans laquelle est enregistrée la priorité d'un dispositif parmi une pluralité de dispositifs devant être un coordinateur ;
une unité de commande de transfert qui demande un transfert vers un dispositif sélectionné en se référant à la liste de priorités des dispositifs ; et
u n émetteur-récepteur qui émet des informations concernant le réseau vers le dispositif sélectionné en fonction du transfert, **caractérisé en ce que** :
la priorité des dispositifs est fixée en fonction d'un type de dispositif, et **en ce qu'**un dispositif est réglé à une désignation de priorité plus élevée que dans d'autres cas si le type de dispositif est un dispositif source.

2. Appareil selon la revendication 1, dans lequel une télévision numérique présente une désignation de priorité la plus élevée.

3. Appareil selon la revendication 1, dans lequel l'unité de commande de transfert sélectionne un dispositif sans fil afin qu'il soit un coordinateur de réserve pour d'autres dispositifs sans fil appartenant au réseau en se référant à la liste de priorités des dispositifs, et demande le transfert au dispositif sélectionné si un e condition particulière est satisfaite.

4. Appareil selon la revendication 1, dans lequel le réseau est un réseau à large bande et à haute fréquence, et dans lequel la largeur de bande à haute fréquence est de plusieurs dizaines de gigabits, et les données sont des données AV non comprimées.

5. Appareil selon la revendication 2, dans lequel u n dispositif ayant de s performances matérielles supérieures est réglé à la désignation de priorité élevée si des dispositifs, parmi la pluralité de dispositifs, sont du même type.

6. Appareil selon la revendication 3, dans lequel la condition spécifique est qu'au moins un coordinateur courant soit brusquement mis hors tension, qu'il soit attendu que le coordinateur courant soit mis hors tension, que le coordinateur courant soit connecté de façon incorrecte aux autres dispositifs présents sur le réseau, et qu'un dispositif ayant une priorité plus élevée se joigne au réseau.

7. Appareil selon la revendication 1, dans lequel les informations concernant le réseau comprennent au moins une information de dispositif concernant d'autres dispositifs et des informations de planification de créneaux temporels.

8. Appareil selon la revendication 3, dans lequel l'unité de commande de transfert reçoit une réponse de transfert du dispositif sélectionné.

9. Appareil selon la revendication 8, dans lequel l'unité de commande de transfert émet une balise comprenant un élément d'informations de transfert (IE) par l'intermédiaire de l'émetteur-récepteur.

10. Procédé de transfert de coordinateur dans un réseau, le procédé consistant à :
sélectionner un dispositif parmi une pluralité de dispositifs afin qu'il soit un coordinateur en se référant à une liste de priorités des dispositifs indiquant une priorité des dispositifs ;
demander un transfert au dispositif sélectionné ; et transmettre des informations concernant le réseau au dispositif sélectionné en fonction du transfert, **caractérisé en ce que** :
la priorité des dispositifs est fixée en fonction d'un type de dispositif, et **en ce qu'**un dispositif est réglé à une désignation de priorité plus élevée que dans d'autres cas si le type de dispositif est un dispositif source.

11. Procédé selon la revendication 10, dans lequel une télévision numérique présente une désignation de priorité la plus élevée.

12. Procédé selon la revendication 10, consistant en outre à recevoir une réponse de transfert en provenance du dispositif sélectionné.

13. Procédé selon la revendication 10, consistant en outre à :
diffuser un e balise comprenant un élément d'informations de transfert (IE).

14. Procédé de transfert de coordinateur dans un réseau, le procédé consistant à :
déterminer un coordinateur de réserve sur la base d'une priorité de dispositif ;
détecter qu'une balise n' a pas été reçue et qu'une période de balise supérieure à un temps prédéterminé s'est écoulée ; et
émettre la balise vers une pluralité de dispositifs présents sur le réseau en tant qu e nouveau coordinateur, **caractérisé par** le fait de :
régler la priorité des dispositifs en fonction d'un type de dispositif, et régler un dispositif à une désignation de priorité plus élevée que dans d'autres cas si le type de dispositif est un dispositif source.

15. Procédé selon la revendication 14, dans lequel une télévision numérique a une désignation de priorité la plus élevée.
